# EUROPEAN PATENT SPECIFICATION

(11) **EP 2 428 531 B1**
(45) Date of publication and mention of the grant of the patent: **22.02.2017**
(21) Application number: 11180502.4
(22) Date of filing: 08.09.2011
(51) Int. Cl.: C08J 5/00, C08J 3/205, C08K 3/00, B82Y 30/00

(54) **Polyvinyl chloride nanocomposite and method of making the same**
Polymerzusammensetzung und Herstellungsverfahren dafür
Composition de polymère et son procédé de fabrication

(30) Priority: 10.09.2010 GB 201015027
(43) Date of publication of application: 14.03.2012
(73) Proprietor: Ineos Norge Holdings AS, 3966 Stathelle (NO)
(72) Inventor: Jacobsen, Harald, 3960 Stathelle (NO); Sterky, Anna Karin Sophie, 413 25 Goteborg (SE)
(74) Representative: King, Alex

(56) References cited:
- US-A1- 2008 194 736
- US-A1- 2008 269 377
- US-A1- 2010 038 817
- DEKA B K ET AL: "Effect of coupling agent and nanoclay on properties of HDPE, LDPE, PP, PVC blend and Phargamites karka nanocomposite", COMPOSITES SCIENCE AND TECHNOLOGY, ELSEVIER, UK, vol. 70, no. 12, 16 July 2010 (2010-07-16) , pages 1755-1761, XP027227712, ISSN: 0266-3538 [retrieved on 2010-07-16]
- REN JIE ET AL: "Polyvinyl chloride/montmorillonite nanocomposite and its preparation", HCAPLUS, 25 January 2005 (2005-01-25), XP002436756, -& CN 1 482 170 A (UNIV TONGJI [CN]) 17 March 2004 (2004-03-17)
- MADALENO L ET AL: "Morphology, thermal and mechanical properties of PVC/MMT nanocomposites prepared by solution blending and solution blending+melt compounding", COMPOSITES SCIENCE AND TECHNOLOGY, ELSEVIER, UK, vol. 70, no. 5, 1 May 2010 (2010-05-01), pages 804-814, XP026966016, ISSN: 0266-3538 [retrieved on 2010-02-01]

## Description

This invention relates to polymer compositions and methods of making them. More especially the invention relates to PVC polymer and PVC copolymer nanocomposites and methods of making them.

Polymer composites in which a filler is dispersed in a polymer matrix have long been known. The filler can improve some material properties or reduce cost. The beneficial properties imparted by the filler are generally however offset in part by deleterious effects such as brittleness, opacity or increased density.

Polymers in which the filler particles comprise nanoparticles are known. Known nanoparticles have at least one dimension not greater than 200nm, such as not greater than 50nm, for example not greater than 20nm such as not greater than 5nm. The obtained so called polymer nano composites can have improved properties such as stiffness, toughness, UV-stability and wear resistance depending on the nature of the nanoparticle. A problem with preparing polymer nanocomposites is that because the particle size is small the van der Waals forces between the particles are large and the particles tend to agglomerate. If the particles agglomerate then the benefits associated with their small size are lost and the resulting composite material properties approach those of a conventional composite.

Three main ways of preparing polymer nanocomposites are known; in-situ polymerization, solvent dispersion and melt dispersion.

In in-situ polymerization the nanoparticles are dispersed in monomer or monomer solution. The monomer is then polymerised and the nanoparticles are dispersed in the polymer matrix.

In solvent dispersion a solvent is used which dissolves the polymer and disperses the nanoparticles. In most cases the method is not suitable for commercial application since large quantities of solvent are required. This is not generally acceptable on a commercial scale except for water soluble polymers such as poly(ethylene oxide) because of the difficulty and cost in handling large quantities of solvent.

In melt dispersion the nanoparticles are dissolved in a polymer melt which is then allowed to cool. This method has been extensively studied since it is simple to use and existing equipment can be used. Furthermore where the nano material is silicate clay such as montmorillonite the shear forces to which the clay is subject during processing helps the polymer penetrate the clay and shear the clay sheets apart.

It is especially difficult to form polyvinylchloride ("PVC") nanocomposites. PVC is of relatively low thermal stability. It decomposes by the elimination of hydrogen chloride from the polymer chain and the formation of coloured conjugated polyenes. This is particularly so when the nanoparticle material has been ammonium treated. Ammonium treated silicate clays sometimes known as OMMT ("organically modified montmorillonite") have been proposed as nanoparticles for PVC composites because of the beneficial effects on some of the composite's properties. Nevertheless ammonium ions formed from the decomposition of the tertiary amine functionality of the OMMT are believed to accelerate dehydrohalogenation of the PVC and thus be responsible for the enhanced discoloration found with PVC nano-OMMT composites.

EP 2 251 186 describes a method of increasing the electrical conductivity of plastics objects by coating them with a suspension of carbon nano tubes and allowing the continuous phase to evaporate.

WO 2010/102763 published 16 September 2010 describes a polyurethane containing carbon nano tubes. Both the nano tubes and the polyurethane are dispersed in water, mixed and the water allowed to evaporate.

EP 1 439 248 describes a process in which carbon tubes are dispersed in a polar solvent and added to a solution of a polymer such as polyvinyl alcohol, polyvinyl pyrrolidone, cellulose, polystyrene, polyester and polyurethane. The solvent is then evaporated.

US 2010/038817 describes a process in which a nano material source is dispersed in a continuous phase and then blended in an extruder with molten thermoplastic.

US 2004/065970 describes a process in which carbon nano tubes are dispersed in a continuous phase and mixed with a solution of a polyaniline salt. The solvent is allowed to evaporate.

WO 2009/032072 describes a process in which a metal oxide nano material source is dispersed in a non-aqueous continuous phase and reacted with a coupling agent. Transparent polymer such as acrylate or methacrylate polymer is dissolved or dispersed in the continuous phase which is then allowed to evaporate. It has now surprisingly been found that by dispersing the nanoparticles in a diluent and contacting the dispersion with a dry polymer capable of sorbing for example absorbing diluents and then removing the diluent to form a polymer nano composite with improved

mechanical properties is obtained. It is not necessary to employ a coupling agent. According to the invention there is provided a method of preparing a polymer nanocomposite material, the method comprising the steps of
a) providing a dispersion of a nano material source in a continuous phase;
b) contacting the dispersion with sorbent polyvinyl chloride polymer or polyvinyl chloride copolymer with at least 50% vinyl chloride particles; and
c) removing the continuous phase to form a mixture of the polymer and nano material. The particles can have an average particle size in the range 20-1000µm, preferably 50-500µm more preferably 5-300µm as determined by ISO1624. The polyvinyl chloride polymer or polyvinyl chloride copolymer particles can have a plasticizer absorption of greater than 80gkg⁻¹ preferably greater than 140gkg⁻¹ as determined by ISO4608. The continuous phase can be selected from paraffins, water and alcohols and miscible mixtures thereof. The nano material source can be selected from montmorillonite, ammonium treated montmorillonite and silica, nano metals, metal oxides such as iron, zinc and titanium oxides, inorganic fibres, organic fibres, carbon and cellulose nano tubes and graphenes. The nano material can be colloidal silica produced by a sol-gel process and optionally wherein the silica is dispersed in an aqueous phase or wherein the silica is in the form of hybrid silica particles dispersed in a paraffin or an alcohol. In some embodiments the nano material is montmorillonite dispersed in an aqueous phase or the nano material is ammonium treated montmorillonite dispersed in nitrobenzene. The nano material source can comprise 0.1 to 80wt% preferably 30 to 70wt% more preferably 20 to 60wt% of the dispersion. The nano material source dispersion can be added stepwise to the polymer with continuous phase of the dispersion being removed between additions. The mixture of polymer and nano material can be subjected to shearing such as calendaring or extrusion.

The invention is used for PVC polymers. As
explained hereinafter the polymer should be capable of sorbing at least a small amount of the dispersion to be described hereinafter. To facilitate this, the polymer is preferably particulate with a porous structure. Typical particle sizes can be in the range 20 to 1000 µm, preferably 50 to 500 µm more preferably 50 to 300µm. Particle sizes can be measured by wet sieving according to ISO 1624. The porous structure can be measured as plasticizer absorption according to ISO 4608. The plasticizer absorption should be larger than 80 gkg⁻¹, preferably larger than 140 gkg⁻¹.

Any compatible nano material source can be used. Examples include silicate clays such as montmorillonite ("MMT") and OMMT. Other materials such as colloidal silica, nano metal, metal oxides such as iron, zinc and titanium oxides, inorganic fibres, organic fibres, carbon and cellulose nano tubes and graphenes can be used. The nano materials can be used alone or in admixture. The nano material source selected depends on the properties which it is intended to enhance. For example silica may enhance scratch resistance and impact strength while silicate clays may enhance stiffness and fire resistance. The nano material source can be used in nano size in other words 100nm as measured by scanning electron microscopy or light scattering methods, or less or it can be reduced to this size during processing.

The nano material source is dispersed in a liquid dispersant. The liquid is chosen so as to be one which is compatible with both the nano source material and the polymer. The liquid should be capable of being sorbed by the polymer. Where the nano material source is not already in nano form the liquid desirably promotes nano particle formation. Thus for example where the nano material source is MMT the liquid is preferably water and where the nano material source is OMMT the liquid is preferably water, alcohols such as methanol, ethanol, propanol or isopropanol or nitrobenzene because these liquids promote swelling and/or exfoliation of the clay layers. The liquid may contain adjuvants such as cationic, non-ionic and anionic surfactants for example to stabilise the dispersion to promote de-agglomeration or exfoliation of the nano material source or to promote compatibility of the nano material and polymer

The nano material source can be formed in situ in the liquid for example in a sol-gel process where the general principle is to cation exchange a sodium silicate to the desired pH, where the polymerization takes place. Then the sol is stabilized and concentrated to the desired content.

The precise amount of nano material source dispersed in the liquid is not critical to the invention but may typically be in the range 0.1 to 80 preferably 20 to 60wt% of the dispersion.

In accordance with the invention the liquid dispersion is contacted with the polymer so that liquid is sorbed by the polymer and the liquid phase is removed from the mixture. Typically the liquid is removed by heating or by reduction in pressure or both. The skilled worker will have no difficulty in devising suitable temperatures and pressures. The remaining liquid is typically less than 5 gkg⁻¹ polymer. If the polymer is not very sorbent of the liquid dispersion it may be necessary to perform several charging steps in which an amount of dispersion is sorbed onto the polymer and the liquid removed. The total amount of nano source material sorbed onto the polymer will depend on the materials involved and the desired properties but will typically be in the range 1 to 10phr for example 2 to 6phr.

The dried mixture is then subjected to processing for example in conventional way by blending with other ingredients and subjecting to shear for example in a twin-screw extruder, a single-screw extruder, Brabender mixer, roll-mill or Gelimat-type thermokinetic mixer or by calendaring.

Embodiments of the invention will now be described by way of example.

### Example 1

MMT (75g) (Polymer grade MMT-PV supplied by Nanocor Inc) dispersed in water (700ml) was treated with an ultrasonic probe for 15 minutes. C₁₂₋₁₄ alcohol ethoxylate propoxylate non-ionic surfactant (Berol 087 supplied by Akzo Nobel Surface Chemistry AB) (25g) dissolved in water (300ml) was added. The obtained mixture was treated with an ultrasonic probe for a further 15 minutes.

The mixture was then slowly added to a K60 PVC suspension with an average particle size of 130 µm (S6045 supplied by Ineos ChlorVinyls) (1500g) in a high speed mixer. The mixer was heated to 70°C for 25 minutes and evaporating water was led away through a vent pipe. Following this further water was removed in a vacuum oven at 50°C until the water content as determined by gravimetric measurement was below 3gkg⁻¹ PVC.

The resulting material was then made up into a dry blend with the additional ingredients set out in Table 1 in a high shear mixer. The dry blend was further processed on a Schwabenthan polymix 150L two-roll mill at 185°C. Sample foils were withdrawn after milling for 3 minutes and subject to mechanical testing.

### Comparative Example 1

Example 1 was repeated except the MMT was omitted. The ingredients and results are shown in Table 1.

### Comparative Example 2

Example 1 was repeated with the same clay and clay treatment except that following the ultrasonic treatment the water was removed from the mixture in a vacuum oven in the absence of shear and the obtained dry OMMT was used in place of the MMT mixture used in Example 1. The ingredients and results are shown in Table 1.

**Table 1**

| Formulation / phr | Example 1 | Comparative Example 1 | Comparative Example 2 |
|---|---|---|---|
| S-PVC | 0 | 100 | 100 |
| Sheared S-PVC/MMT | 105 | 0 | 0 |
| OMMT | 0 | 0 | 5 |
| Crompton Mark 17MOK | 2 | 2 | 2 |
| ESO (epoxidized soy bean oil) | 0.7 | 0.7 | 0.7 |
| Allied AC316A | 0.2 | 0.2 | 0.2 |
| Cognis Oleochemicals Loxiol G72 | 0.4 | 0.4 | 0.4 |
| Cognis Oleochemicals Loxiol G60 | 1 | 1 | 1 |
| Rohm & Haas Paraloid K120N | 0.6 | 0.6 | 0.6 |
| Charpy Impact strength / kJm⁻² | 3.3 | 3.9 | 2.7 |
| Standard Deviation σ | 0.6 | 0.4 | 0.6 |
| Modulus of Elasticity / MPa | 6285 | 5354 | 5688 |
| Standard Deviation σ | 147 | 104 | 118 |

It will be readily apparent from the results that the invention provides significantly increased stiffness with the modulus of elasticity being 17% greater than when no MMT was present and 6% greater than when the wet particles were dried and added in a conventional manner.

Furthermore the reduction in impact strength caused by the filler was less in accordance with the invention than when filler was incorporated in conventional manner.

### Example 2

Hybrid silica particles (FunzioNano ® supplied by SINTEF) (30g) were dispersed in white spirit (75g). The dispersion was added slowly to a K65 PVC suspension (S6575 supplied by Ineos ChlorVinyls) of an average particle size of 140 µm (1500g) in a high speed mixer. The mixer was heated to 70°C for 25 minutes and white spirit vapour led away through a vent pipe. Volatile content as determined by gravimetric measurement was below 3gkg⁻¹ PVC. The resulting mixture was made up into a dry blend with the ingredients shown in Table 2 in a high shear mixer. Processing and specimen testing was then performed as described above except that the processing temperature was 190°C.

### Comparative Example 3

A PVC formulation without silica was by making a dry blend of the ingredients shown in Table 2 and then processing and testing as described above with reference to Example 2.

### Comparative Example 4

Vinyl chloride monomer (VCM) (1600g) was polymerised in the presence of water (2400g), suspending agent and initiator at 50°C to give a polymer corresponding to commercial S6575 PVC resin. The polymer powder was dried and made up in to a dry blend with the ingredients set out in Table 2 and processed as described above with reference to Example 2.

### Comparative Example 5

Hybrid silica particles (FunzioNano ®) (38g) were dispersed in VCM (1600g) and heated with stirring (120 minutes at 70°C). Polymer was made with the mixture as described in Comparative Example 4. It was found that 85% of the silica particles were incorporated into the polymer. The polymer powder was then processed as described above by reference to Comparative Example 4.

**Table 2**

| Formulation/phr | Example 2 | Comparative Example 3 | Comparative Example 4 | Comparative Example 5 |
|---|---|---|---|---|
| PVC (S6575) | 0 | 100 | 0 | 0 |
| Lab polymerised VCM no silica | 0 | 0 | 100 | 0 |
| Lab polymerised VCM with silica | 0 | 0 | 0 | 100 |
| PVC (S6575) with silica | 100 | 0 | 0 | 0 |
| Crompton Mark 17 MOK | 2 | 2 | 2 | 2 |
| ESO | 0.7 | 0.7 | 0.7 | 0.7 |
| Allied AC 316A | 0.2 | 0.2 | 0.2 | 0.2 |
| Cognis Oleochemicals Loxiol G72 | 0.4 | 0.4 | 0.4 | 0.4 |
| Cognis Oleochemicals Loxiol G60 | 1 | 1 | 1 | 1 |
| Rohm & Haas Paraloid K120N | 0.6 | 0.6 | 0.6 | 0.6 |
| Charpy impact strength / kJm⁻² | 10.4 | 6 | 5.4 | 6 |
| Standard deviation σ | 0.6 | 0.8 | 0.7 | 0.9 |
| Modulus of elasticity / MPa | 2798 | 3013 | 2714 | 2432 |
| Standard deviation σ | 29 | 150 | 63 | 68 |

It will therefore be apparent that the impact strength of the composite of the invention is very much improved (by 73%) compared with formulations which do not include silica while the modulus of elasticity is only slightly reduced. Much worse results are obtained when the particles are incorporated in other ways.

## Claims

1. A method of preparing a polymer nanocomposite material, the method comprising the steps of
a) providing a dispersion of a nano material source in a continuous phase;
b) contacting the dispersion with sorbent polyvinyl chloride polymer or polyvinyl chloride copolymer with at least 50% vinyl chloride particles; and
c) removing the continuous phase to form a mixture of the polymer and nano material.

2. A method as claimed in claim 1 wherein the particles have an average particle size in the range 20-1000µm, preferably 50-500µm more preferably 5-300µm as determined by ISO1624.

3. A method as claimed in claim 1 or claim 2 wherein the polyvinyl chloride polymer or polyvinyl chloride copolymer particles have a plasticizer absorption of greater than 80gkg⁻¹ preferably greater than 140gkg⁻¹ as determined by ISO4608.

4. A method as claimed in any one of the preceding claims wherein the continuous phase is selected from paraffins, water and alcohols and miscible mixtures thereof.

5. A method as claimed in any one of the preceding claims wherein the nano material source is selected from montmorillonite, ammonium treated montmorillonite and silica, nano metals, metal oxides such as iron, zinc and titanium oxides, inorganic fibres, organic fibres, carbon and cellulose nano tubes and graphenes.

6. A method as claimed in any one of claims 1 to 4 wherein the nano material is colloidal silica produced by a sol-gel process.

7. A method as claimed in claim 6 wherein the silica is dispersed in an aqueous phase or wherein the silica is in the form of hybrid silica particles dispersed in a paraffin or an alcohol.

8. A method as claimed in claim 5 wherein the nano material is montmorillonite dispersed in an aqueous phase or wherein the nano material is ammonium treated montmorillonite dispersed in nitrobenzene.

9. A method as claimed in any one of the preceding claims wherein the nano material source comprises 0.1 to 80wt% preferably 20 to 60wt% of the dispersion.

10. A method as claimed in any one of the preceding claims wherein the nano material source dispersion is added stepwise to the polymer with the continuous phase of the dispersion being removed between additions.

11. A method as claimed in any one of the preceding claims wherein the mixture of polymer and nano material is subjected to shearing such as calendaring or extrusion.

## Patentansprüche

1. Verfahren zum Herstellen eines Polymer-Nanokompositmaterials, wobei das Verfahren die Schritte umfasst:
a) Bereitstellen einer Dispersion eines Nanomaterialausgangsstoffs in einer kontinuierlichen Phase;
b) Inkontaktbringen der Dispersion mit Sorbens Polyvinylchloridpolymer oder Polyvinylchloridcopolymer mit wenigstens 50 % Vinylchloridteilchen; und
c) Entfernen der kontinuierlichen Phase, um eine Mischung aus dem Polymer und Nanomaterial zu bilden.

2. Verfahren wie in Anspruch 1 beansprucht, wobei die Teilchen eine mittlere Teilchengröße im Bereich 20-1000 µm, vorzugsweise 50-500 µm, mehr bevorzugt 5-300 µm, bestimmt durch ISO1624, aufweisen.

3. Verfahren wie in Anspruch 1 oder Anspruch 2 beansprucht, wobei die Polyvinylchloridpolymer- oder Polyvinylchloridcopolymerteilchen eine Weichmacherabsorption von mehr als 80 gkg⁻¹, vorzugsweise mehr als 140 gkg⁻¹, bestimmt durch ISO4608, aufweisen.

4. Verfahren wie in einem der vorangehenden Ansprüche beansprucht, wobei die kontinuierliche Phase aus Paraffinen, Wasser und Alkoholen und mischbaren Mischungen davon ausgewählt ist.

5. Verfahren wie in einem der vorangehenden Ansprüche beansprucht, wobei der Nanomaterialausgangsstoff aus Montmorillonit, mit Ammonium behandeltem Montmorillonit und Siliciumdioxid, Nanometallen, Metalloxiden wie Eisen-, Zink- und Titanoxiden, anorganischen Fasern, organischen Fasern, Kohlenstoff- und Cellulose-Nanoröhren und Graphenen ausgewählt ist.

6. Verfahren wie in einem der Ansprüche 1 bis 4 beansprucht, wobei das Nanomaterial kolloidales Siliciumdioxid ist, das durch ein Sol-Gel-Verfahren hergestellt ist.

7. Verfahren wie in Anspruch 6 beansprucht, wobei das Siliciumdioxid in einer wässrigen Phase dispergiert ist oder wobei das Siliciumdioxid in Form von hybriden Siliciumdioxidteilchen vorliegt, die in einem Paraffin oder einem Alkohol dispergiert sind.

8. Verfahren wie in Anspruch 5 beansprucht, wobei das Nanomaterial Montmorillonit ist, der in einer wässrigen Phase dispergiert ist, oder wobei das Nanomaterial mit Ammonium behandelter Montmorillonit ist, der in Nitrobenzol dispergiert ist.

9. Verfahren wie in einem der vorangehenden Ansprüche beansprucht, wobei der Nanomaterialausgangsstoff 0,1 bis 80 Gew.-%, vorzugsweise 20 bis 60 Gew.-% der Dispersion umfasst.

10. Verfahren wie in einem der vorangehenden Ansprüche beansprucht, wobei die Nanomaterialausgangsstoffdispersion stufenweise zu dem Polymer zugegeben wird, wobei die kontinuierliche Phase der Dispersion zwischen Zugaben entfernt wird.

11. Verfahren wie in einem der vorangehenden Ansprüche beansprucht, wobei die Mischung aus Polymer und Nanomaterial einer Scherung, wie etwa einem Kalandrieren oder einer Extrusion, unterworfen wird.

## Revendications

1. Procédé pour préparer un matériau nanocomposite polymère, lequel procédé comprend les étapes consistant à :
a) disposer d'une dispersion d'une source de nanomatériau dans une phase continue ;
b) mettre la dispersion en contact avec un polymère de poly(chlorure de vinyle) ou un copolymère de poly(chlorure de vinyle) avec au moins 50 % de particules de chlorure de vinyle ; et
c) retirer la phase continue pour former un mélange du polymère et du nanomatériau.

2. Procédé selon la revendication 1, dans lequel les particules ont une granulométrie moyenne, déterminée conformément à la norme ISO1624, située dans la plage allant de 20 à 1000 µm, de préférence de 50 à 500 µm, mieux encore de 5 à 300 µm.

3. Procédé selon la revendication 1 ou la revendication 2, dans lequel les particules de polymère de poly(chlorure de vinyle) ou de copolymère de poly(chlorure de vinyle) ont une absorption de plastifiant, déterminée conformément à la norme ISO4608, supérieure à 80 g.kg⁻¹, de préférence supérieure à 140 g.kg⁻¹.

4. Procédé selon l'une quelconque des revendications précédentes, dans lequel la phase continue est choisie parmi les paraffines, l'eau et les alcools, ainsi que des mélanges miscibles de ceux-ci.

5. Procédé selon l'une quelconque des revendications précédentes, dans lequel la source de nanomatériau est choisie parmi la montmorillonite, la montmorillonite traitée à l'ammonium et la silice, les nanométaux, les oxydes métalliques tels que les oxydes de fer, zinc et titane, les fibres inorganiques, les fibres organiques, les nanotubes de carbone et de cellulose, et les graphènes.

6. Procédé selon l'une quelconque des revendications 1 à 4, dans lequel le nanomatériau est une silice colloïdale produite par un procédé sol-gel.

7. Procédé selon la revendication 6, dans lequel la silice est dispersée dans une phase aqueuse ou dans lequel la silice est sous la forme de particules de silice hybrides dispersées dans une paraffine ou un alcool.

8. Procédé selon la revendication 5, dans lequel le nanomatériau est une montmorillonite dispersée dans une phase aqueuse, ou dans lequel le nanomatériau est une montmorillonite traitée à l'ammonium et dispersée dans du nitrobenzène.

9. Procédé selon l'une quelconque des revendications précédentes, dans lequel la source de nanomatériau représente 0,1 à 80 % en poids, de préférence 20 à 60 % en poids de la dispersion.

10. Procédé selon l'une quelconque des revendications précédentes, dans lequel la dispersion de la source de nanomatériau est ajoutée par étapes au polymère, la phase continue de la dispersion étant éliminée entre les additions.

11. Procédé selon l'une quelconque des revendications précédentes, dans lequel le mélange de polymère et de nanomatériau est soumis à un cisaillement tel qu'un calandrage ou une extrusion.
